# EUROPÄISCHE PATENTSCHRIFT

(11) **EP 2 501 152 B1**
(45) Veröffentlichungstag und Bekanntmachung des Hinweises auf die Patenterteilung: **20.12.2017**
(21) Anmeldenummer: 11158711.9
(22) Anmeldetag: 17.03.2011
(51) Int. Cl.: H04Q 11/00, H04B 10/272

(54) **Leistungskoppler und Verfahren zur automatisierten Identifizierung der Zuordnung von Teilnehmern zu Anschlusspunkten in Leistungskoppler-basierten passiven optischen Netzen**
Power coupler and method for automatically identifying the allocation of subscribers to ports in power coupler based passive optical networks
Coupleur de puissance et procédé d'identification automatisée de l'attribution d'abonnés à des ports dans des réseaux optiques passifs basés sur des coupleurs de puissance

(43) Veröffentlichungstag der Anmeldung: 19.09.2012
(73) Patentinhaber: Deutsche Telekom AG, 53113 Bonn (DE)
(72) Erfinder: Weis, Erik, 14612 Falkensee (DE); Breuer, Dirk, 16727 Oberkrämer OT Bötzow (DE); Lange, Christoph, 10318 Berlin (DE)
(74) Vertreter: Vossius & Partner Patentanwälte Rechtsanwälte mbB

(56) Entgegenhaltungen:
- EP-A1- 1 926 238
- US-A1- 2007 154 215
- US-A1- 2008 279 557

## Beschreibung

### Gebiet der Erfindung

Die vorliegende Erfindung bezieht sich auf das allgemeine Gebiet der Telekommunikation und im Speziellen auf die Identifikation der Zuordnung von einzelnen Ports in optischen Zugangsnetzen, die auf passiven optischen Netzen (PONs) basieren, zu Teilnehmer-Endpunkten.

### Hintergrund der Erfindung und Stand der Technik

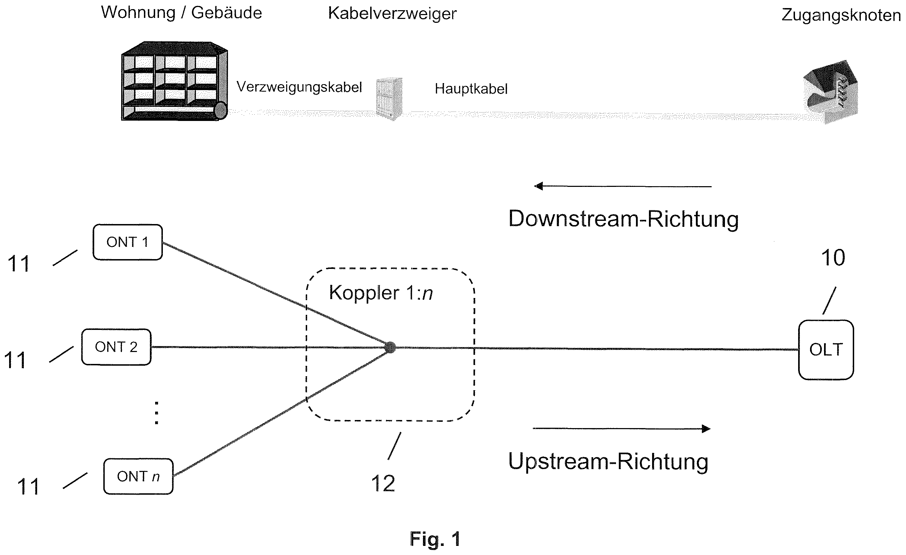

Für glasfaserbasierte Zugangsnetze ist das Konzept des passiven optischen Netzes (PON) ein verbreiteter Ansatz, um kostengünstig hochbitratigen Teilnehmerzugang bereitzustellen. Fig.1 zeigt in schematischer Form eine herkömmliche Anordnung. Zunächst ist ein optisches Leitungsende OLT (Optical Line Termination) 10 gezeigt. Das optische Leitungsende 10 ist die netzseitige Schnittstelle des optischen Teils des Zugangsnetzes, die mit einem oder mehreren optischen Verteilnetzen ODN (Optical Distribution Networks) verbunden ist. Der OLT 10 hat als optischer Leitungsabschluss die Aufgabe der optisch-elektrischen bzw. der elektrisch-optischen Signalwandlung. Das optische Leitungsende 10 sendet Signale in Richtung der Teilnehmerstationen 11 (ONT, Optical Network Termination). Der Leistungskoppler 12 ist das Zentralelement des passiven optischen Netzes und teilt das vom OLT kommende Signal in Downstream-Richtung auf alle Teilnehmerstationen 11 auf bzw. setzt - in Upstream-Richtung - das von den Teilnehmerstationen 11 kommende Signal zur Übertragung and das OLT 10 zusammen. Das OLT 10 befindet sich beispielsweise in einem Zugangsknoten, der über ein Hauptkabel mit einem Kabelverzweiger verbunden ist. Dort befindet sich der Leistungskoppler 12. Über entsprechende Verzweigungskabel sind dann die verschiedenen Gebäude bzw. Wohnungen an den Kabelverzweiger angeschlossen, wie in Fig. 1 gezeigt.

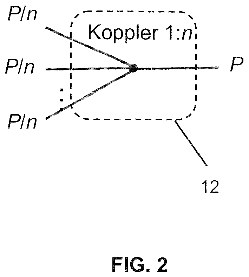

Das Prinzip des Leistungskopplers 12 verdeutlicht Fig. 2. Der Leistungskoppler 12 ermöglicht es, dass jede Teilnehmerstationen 11 das gesamte Signal erhält, wobei die Gesamtleistung *P* durch die Anzahl der Kopplerports *n* geteilt wird (P/n).

In einer solchen Anordnung ist es für die reine Funktionsweise unerheblich, an welchen Kopplerport welche Teilnehmerstation angeschlossen ist. Funktionsbedingt sind alle Kopplerports gleichwertig und besitzen keine individuellen Eigenschaften, die eine Identifizierung ermöglichen. Die Kopplerports eines Leistungskopplers besitzen deshalb gemäß dem Stand der Technik keine Kennzeichnung. Deshalb ist keine Zuordnung der einzelnen ONTs bzw. Teilnehmer zu den Kopplerports möglich, wenn das passive optische Netz installiert und in Betrieb ist. Eine Zuordnung ist entweder in der Installationsphase möglich, wenn der Techniker manuell den Kopplerport, an dem ein entsprechender ONT angeschlossen ist, dokumentiert, oder später nur mit großem Aufwand manuell feststellbar, z. B. durch Öffnen der Muffe, in der der Leistungskoppler untergebracht ist und anschließender beidseitiger Messung der einzelnen Abschnitte.

Für die reine Funktionsweise des passiven optischen Netzes aus übertragungstechnischer Sicht ist die Kenntnis der Zuordnung zwischen Kopplerport und Teilnehmerstation verzichtbar. Um jedoch PON-basierte Netze kosteneffizient betreiben zu können, ist es notwendig, die genannte Zuordnung zwischen Kopplerport und spezifischem ONT zu kennen. Als Beispiel seien folgende praxisrelevante Fälle genannt:
▪ Im Fehlerfall ist es zur Fehlereingrenzung und zur Reparatur erforderlich, diese Zuordnung zu kennen, ebenso beim Austausch von Kabeln.
▪ Soll das Kopplungsverhältnis verändert werden - z. B. verringert, um die Zugangsbitrate je Kunde zu erhöhen -, ist eine Kenntnis der genannten Zuordnung eine bedeutende Voraussetzung.
▪ Ebenso ist es bei einer Umschaltung von bestehenden PON-Systemen auf leistungsfähigere PON-Systeme der nächsten Generation wichtig, diese Zuordnung zu kennen, damit bei Parallelbetrieb von z. B. zwei PON-Generationen über dasselbe optische Verteilnetz nur die ONTs auf das leistungsfähigere System umgeschaltet werden können, die diesen Dienst beauftragt haben.
▪ Soll das bestehende, auf Leistungskopplern basierende, PON durch ein anderes - z. B. auf wellenlängenselektiven Kopplern (arrayed waveguide gratings, AWG) basierendes - System umgestellt bzw. migriert werden, so ist das zentrale Element Leistungskoppler durch ein derartiges AWG zu ersetzen. Dazu ist ebenfalls die Kenntnis der Zuordnung von Teilnehmer und Kopplerport notwendig.
▪ Im Fall von mutwilligen bzw. auch versehentlichen Anschaltungen von nicht systemkonformen ONTs kann dies zur Störung der gesamten Übertragung führen. Gerade in diesem Fall ist eine exakte Zuordnung des Kopplerports zum ONT zur effizienten Eingrenzung und Beseitigung der Störung notwendig.

In der US 2008/0279557 A1 wird ein Wellenlängenmultiplex-passives optisches Netz (WDM-PON-System) mit Self-Injection Locking, ein optisches Leitungsende hiervon und ein Datenübertragungsverfahren offenbart.

Die EP 1 926 238 A1 beschreibt ein Ranging-Verfahren und -System für ein passives optisches Netz und eine optische Netzwerkeinheit hierfür.

In der US 2007/0154215 A1 wird ein Verfahren und eine Vorrichtung zum Detektieren optischer Reflexionen in einem optischen Netz beschrieben, um Probleme in dem optischen Netz zu lokalisieren und beurteilen zu können.

### Zusammenfassung der Erfindung

Die vorliegende Erfindung ist durch die beiliegenden Ansprüche definiert.

Der Erfindung liegt die Aufgabe zu Grunde, eine automatisierte Zuordnung von Kopplerport und Teilnehmer zu ermöglichen. Diese Aufgabe wird durch einen Leistungskoppler gemäß Patentanspruch 1, Teilnehmerstationen gemäß Patentanspruch 6 und von den Verfahren gemäß Patentansprüche 8, 13 und 14 gelöst.

Um die gewünschte Eigenschaft einer automatisierten Zuordnung von Kopplerport und Teilnehmer zu erreichen, geht die Erfindung von dem Grundgedanken aus, eine eineindeutige Kennzeichnung der Kopplerports des Leistungskopplers vorzusehen.

Die Erfindung stellt einen Leistungskoppler eines passiven optischen Netzes bereit, mit mindestens einer Anschlussstelle zur Verbindung des Leistungskopplers mit mindestens einem optischen Leitungsende, mehreren Anschlussstellen zur Verbindung des Leistungskopplers mit mindestens einer endseitigen Teilnehmerstation, wobei mindestens einer der mehreren Teilnehmerstation-Anschlussstellen ein Kennzeichnungselement aufweist, das eingerichtet ist, ein von der an dieser Anschlussstelle angeschlossenen Teilnehmerstation empfangenes optisches Signal zu dessen Kennzeichnung eineindeutig zu beeinflussen.

Das Kennzeichnungselement ist vorzugsweise eingerichtet, das empfangene optische Signal an die sendende Teilnehmerstation als reflektiertes optisches Signal zu reflektieren. Dabei kann das empfangene optische Signal im Verlauf von Intensität, Frequenz, oder Phase, oder in einer Kombination daraus beeinflusst werden. Gemäß einer Ausführungsform der Erfindung weist das Kennzeichnungselement ein reflektierendes Filterelement auf. Dieses reflektierende Filterelement kann eine reflektierende Filterstruktur, beispielsweise ein Faser Bragg Gitter aufweisen.

In einer Ausführungsform können sich die reflektierenden Filterelemente der einzelnen Anschlussstellen voneinander unterschieden, um so die eineindeutige Beeinflussung des jeweils empfangenen Signals von der jeweils angeschlossenen Teilnehmerstation bereitzustellen.

Ferner wird von der Erfindung eine Teilnehmerstation eines passiven optischen Netzes bereitgestellt, mit mindestens einer Anschlussstelle zur Verbindung der Teilnehmerstation mit einer Anschlussstelle mindestens eines erfindungsgemäßen Leistungskopplers, wobei die Teilnehmerstation eingerichtet ist, ein optisches Messsignal an den Leistungskoppler zur Identifizierung der Anschlussstelle des Leistungskopplers, mit dem die Teilnehmerstation verbunden ist, zu senden, und ein von Anschlussstelle des Leistungskopplers reflektiertes Signal zu empfangen und die eineindeutige Kennzeichnung, die dem Signal von dem Leistungskoppler versehen wurde, zu extrahieren.

Die Teilnehmerstation ist vorzugsweise dazu eingerichtet, die extrahierte Kennzeichnung an das optische Leitungsende zu übermitteln.

Ferner stellt die Erfindung ein Verfahren bereit, das von einer Anordnung aus mindestens einer Teilnehmerstation und einem Leistungskoppler eines passiven optischen Netzes ausgeführt wird, mit den Schritten:
a) Senden eines optischen Messsignals von einer Teilnehmerstation an einen Leistungskoppler, mit dem die Teilnehmerstation verbunden ist;
b) eineindeutiges Beeinflussen des empfangenen optischen Messsignals zu dessen Kennzeichnung an der Anschlussstelle des Leistungskopplers;
c) Reflektieren des beeinflussten Signals zurück zur sendenden Teilnehmerstation; und
d) Extrahieren, durch die Teilnehmerstation, der dem Messsignal durch die Beeinflussung in Schritt b) vermittelten Kennzeichnung aus dem reflektierten Signal.

Das Verfahren kann ferner aufweisen die Schritte: e) Übermitteln der extrahierten Kennzeichnung von der Teilnehmerstation an das optische Leitungsende, mit dem der Leitungskoppler verbunden ist, und f) Speichern der übermittelten Kennzeichnung in einer Datenbank des optischen Leitungsendes.

Schritt a) wird vorzugsweise von der Teilnehmerstation (11) automatisiert auf Aufforderung durch das optische Leitungsende (10) initiiert.

Vorzugsweise weist das Verfahren den Schritt des Auswertens der übermittelten Kennzeichnung am optischen Leitungsende auf zur Feststellung, ob die Teilnehmerstation korrekt mit der zugeordneten Anschlussstelle verbunden ist oder ob eine nicht registrierte Teilnehmerstation am Leistungskoppler angeschlossen ist.

Das übermittelte Messsignal ist bezüglich der empfangenen Anschlussstelle des Leistungskopplers vorzugsweise unspezifisch.

Ein weiteres erfindungsgemäßes Verfahren, das in einem Leistungskoppler (12) eines passiven optischen Netzes ausgeführt wird, weist die Schritte auf:
- Empfangen, an dem Leistungskoppler, eines optischen Messsignals von einer Teilnehmerstation, die mit einer Anschlussstelle des Leistungskopplers verbunden ist;
- eineindeutiges Beeinflussen des empfangenen optischen Messsignals zu dessen Kennzeichnung an der Anschlussstelle des Leistungskopplers; und
- Reflektieren des beeinflussten Signals zurück zur sendenden Teilnehmerstation.

Gemäß einem weiteren Aspekt wird ein Verfahren bereit gestellt, das in einer Teilnehmerstation eines passiven optischen Netzes ausgeführt wird, mit den Schritten:
- Senden eines optischen Messsignals von der Teilnehmerstation an einen Leistungskoppler, mit dem die Teilnehmerstation verbunden ist;
- Empfangen, an der Teilnehmerstation, des von dem Leistungskoppler reflektierten Signals, das an der Anschlussstelle des Leistungskopplers durch eineindeutiges Beeinflussen des empfangenen optischen Messsignals zu dessen Kennzeichnung erzeugt wird; und
- Extrahieren, durch die Teilnehmerstation, der dem Messsignal durch die Beeinflussung im vorangegangenen Schritt vermittelten Kennzeichnung aus dem reflektierten Signal.

Die erfindungsgemäße Lösung ist mit verschiedenen Vorteilen verbunden. So ist es beispielsweise im Fehlerfall eine einfache Fehlereingrenzung oder Reparatur möglich, ebenso der Austausch von Kabeln. Auch kann auf einfache Weise das Kopplungsverhältnis verändert werden, z. B. verringert, um die Zugangsbitrate je Kunde zu erhöhen. Darüber hinaus ermöglicht die Erfindung eine Umschaltung von bestehenden PON-Systemen auf leistungsfähigere PON-Systeme der nächsten Generation, da bei Parallelbetrieb von z.B. zwei PON-Generationen über dasselbe optische Verteilnetz nur die ONTs auf das leistungsfähigere System umgeschaltet werden können, die diesen Dienst beauftragt haben. Auch ermöglicht die Erfindung eine einfache Umstellung bzw. Migration eines bestehenden, auf Leistungskopplern basierenden, PON durch ein anderes - z. B. auf wellenlängenselektiven Kopplern (arrayed waveguide gratings, AWG) basierendes - System, da das zentrale Element Leistungskoppler durch ein derartiges AWG einfach ersetzt werden kann. Auch verhindert im Fall von mutwilligen bzw. auch versehentlichen Anschaltungen von nicht systemkonformen ONTs die erfindungsgemäße Lösung eine Störung der gesamten Übertragung. Gerade in diesem Fall erlaubt die exakte Zuordnung des Kopplerports zum ONT eine effiziente Eingrenzung und Beseitigung der Störung. Schließlich erlaubt es eine automatische Zuordnung der ONT zu den Kopplerports eine effiziente Bestandsführung und Verwaltung der Systeme im Hinblick auf die Beschaltungsdichte auf dem System und der Glasfaserinfrastruktur zu realisieren und vermeidet Dokumentationsfehler.

Die Erfindung wird im Folgenden unter Bezugnahme auf die Zeichnungen näher erläutert. Es zeigen:
- Fig. 1: eine schematische Darstellung eines herkömmlichen Zugangsnetzes auf Basis eines passiven Leistungskoppler-basierten optischen Netzes;
- Fig. 2: das Prinzip des Leistungskopplers aus Fig. 1;
- Fig. 3: eine schematische Darstellung der erfindungsgemäßen Lösung;
- Fig. 4a und 4b: eine bevorzugte erfindungsgemäße Ausführungsform;
- Fig. 5: Details des Eingangssignals zur filterbasierten Ausführungsform gemäß Fig. 4 einer beispielhaften Filtercharakteristik; und
- Fig. 6: ein Beispiel eines reflektierten Signals zur filterbasierten Ausführungsform gemäß Fig. 4.

### Detaillierte Beschreibung der Erfindung

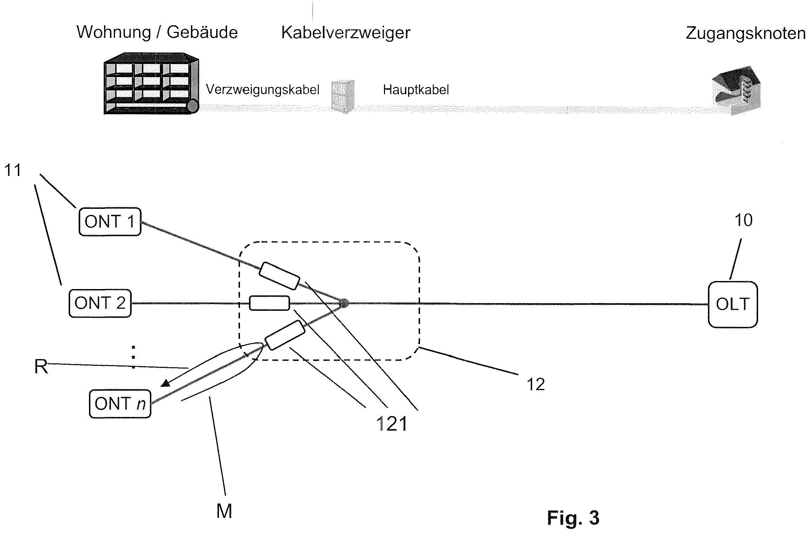

Fig. 3 zeigt in schematischer Form den prinzipiellen Aufbau einer grundsätzlichen Ausführungsform der erfindungsgemäßen Anordnung, welche Teil eines Kommunikationsnetzes ist. Das passive optische Netzwerk als Teil des Kommunikationsnetzes ist in der schon in Fig. 1 gezeigten Form gegeben. Auf eine Wiederholung der Beschreibung der einzelnen Komponenten wird deshalb verzichtet.

Der Leistungskoppler 12 weist erfindungsgemäß an jedem Kopplerport (Ausgang in Richtung des Teilnehmers) eine Kennzeichnung 121 auf, die eine Beeinflussung eines Signals in der Weise vornimmt, dass es eineindeutig identifiziert werden kann und gleichzeitig die eigentliche Signalübertragung nicht bzw. nicht maßgeblich beeinflusst.

Das allgemeine Wirkprinzip der Erfindung basiert darauf, dass zunächst ein unspezifisches optisches Messsignal M von einer Teilnehmerstation 11 (ONT1, ONT2, ..., ONTn) in Richtung des Leistungskopplers gesendet wird. Dazu ist die Teilnehmerstation mit dem Leistungskoppler über eine entsprechende Glasfaserverbindung verbunden. Dort erfährt es eine Beeinflussung durch eine Baugruppe bzw. Kennzeichnungseinrichtung 121 zur eineindeutigen Kennzeichnung der Kopplerports und wird anschließend zum ONT reflektiert. Das reflektierte Signal R wird hierbei entweder im Verlauf von Intensität, Frequenz bzw. Phase, oder in einer Kombination dieser Parameter durch die Baugruppe 121 zur eineindeutigen Kennzeichnung der Kopplerports beeinflusst. Die Beeinflussung ermöglicht es dem ONT 11 die Information zu extrahieren, an welchem Kopplerport er selbst angeschlossen ist. Diese Information wird vorzugsweise von der Teilnehmerstation 11 z.B. über einen vorgesehenen Managementkanal in Upstream-Richtung (also in der der Teilnehmerstation abgewandten Richtung) zum OLT 12 gesendet, so dass an zentraler Stelle z.B. eine Datenbank über diese Zuordnung geführt werden kann. Das Messsignal kann dabei vom ONT sowohl innerhalb des Betriebswellenlängenbereiches des PONs als auch bei einer separaten Messwellenlänge gesendet werden.

Für das Versenden des Messsignals M sind vorzugsweise verschiedene Auslöser denkbar. Beispielsweise initiiert ein Servicetechniker bei der Installation den Messvorgang und veranlasst so die Dokumentation der Zuordnung von Kopplerport und Teilnehmer. Dies ermöglicht eine manuell angestoßene automatische und somit fehlerfreie Dokumentation. Alternativ erfolgt die Messung automatisiert nach Anforderung von der Zentralstelle - des OLT - hin. Dann wendet der ONT 11 das beschriebene automatisierte Verfahren an und überträgt die Informationen, z.B. innerhalb eines bestehenden Managementkanal zum OLT zur Verifizierung der Installation oder automatischen Erfassung der Zuordnung zwischen Kopplerport und Teilnehmer und somit zur automatischen und somit fehlerfreien Dokumentation.

Auf diese Weise lassen sich auch sicherheitsrelevante Aspekte überprüfen, etwa ob ein im System registrierter ONT am richtigen Kopplerport angeschlossen ist. Auf diese Weise kann auch erkannt werden, ob ein nicht registrierter ONT an Kopplerports angeschlossen ist. Somit kann missbräuchlicher Anschluss bzw. Benutzung erkannt werden.

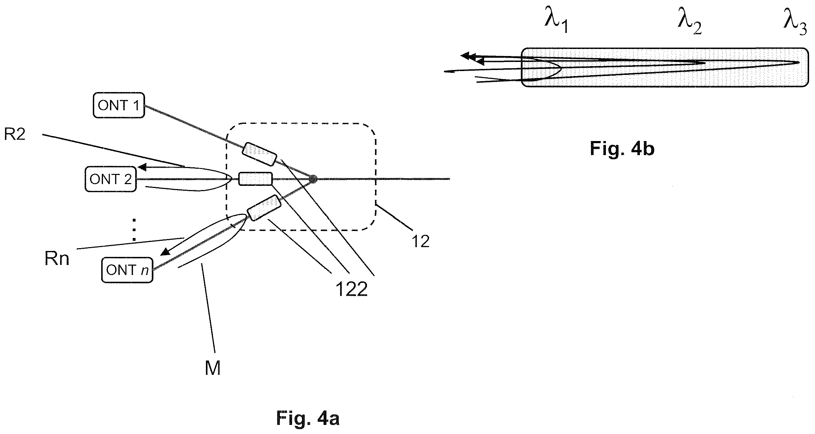

Die Baugruppe bzw. Kennzeichnungseinrichtung 121 wird bei dem in Fig. 4a und Fig. 4b gezeigten Ausführungsbeispiel filterbasiert realisiert. Dazu ist ein jedem Kopplerport zugeordnetes reflektierendes Filterelement vorgesehen. Das ankommende Messsignal M wird an einer reflektierenden Filter bzw. Filterstruktur z.B. einem Faser Bragg Gitter (FBG) reflektiert. Ein FBG reflektiert die verschiedenen Spektralanteile des einfallenden Messsignals M an unterschiedlichen Positionen innerhalb der Filterstruktur. Die Herstellung eines FBG auf einer optischen Faser ist hinlänglich bekannt (siehe hierzu E. Voges, K. Petermann (Herausgeber): Optische Kommunikationstechnik. Berlin, Springer, Abschnitt 12.9 Faseroptische Gitter, Seite 428-440). Die Reflexion der verschiedenen Spektralanteile (z.B. der Wellenlängen λ1, λ2, λ3) ist beispielsweise in Fig. 4b gezeigt. Dadurch lässt sich beispielsweise eine Verbreiterung oder Verschmälerung des rückgestreuten Signals R im Vergleich zum einfallenden Signal erreichen. Wie stark die Verbreiterung oder Verschmälerung des rückgestreuten Signals ist, lässt sich durch den Aufbau der Gitterstruktur im FBG beeinflussen. Durch die unterschiedlichen Kennzeichnungen der verschiedenen Kopplerports werden zu den verschiedenen Teilnehmerstationen unterschiedliche Signale reflektiert. So empfängt ONT2 ein reflektiertes Signal R2 und ONTn ein reflektiertes Signal Rn. Da die Kennzeichnungselemente eineindeutig sind, unterscheiden sich die reflektierten Signale ebenfalls.

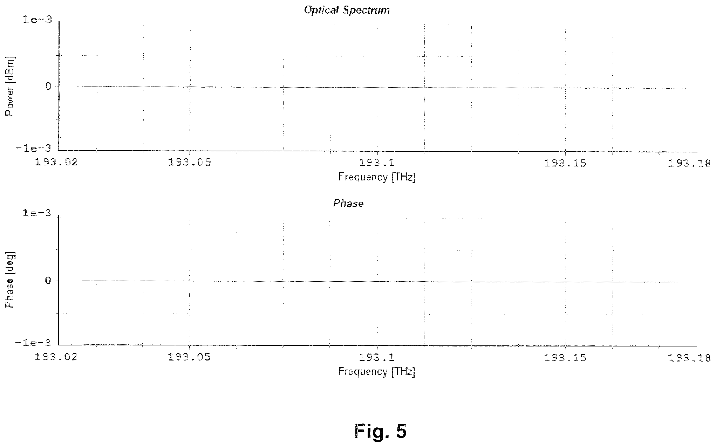

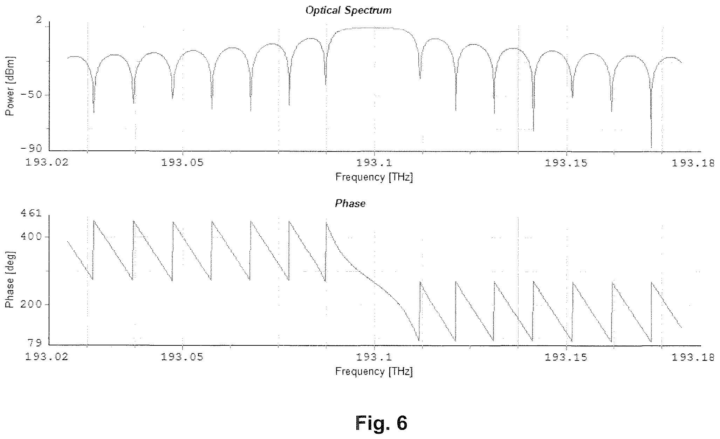

Fig. 5 zeigt beispielhaft ein CW (continuous wave) Eingangssignal bzw. Messsignal M, dass zur Ermittlung der Kennzeichnung versendet wird. Beispielsweise wird dieses Signal einem Faser Bragg Gitter beaufschlagt. Fig. 6 zeigt beispielhaft ein zugehöriges rückgestreutes Signal für dieses Eingangssignal: Das reflektierte Signal des Faser Bragg Gitter kann am ONT dann, je nach Art der Filterstruktur, z.B. hinsichtlich aufgeprägter Phaseninformation bzw. reflektierter Intensität ausgewertet werden. Durch eine mehrfache Beeinflussung des Signals lässt sich dieses Verfahren auch in verteilten, kaskadierten Strukturen einsetzen. Durch eine geeignete Kombination aus Filtern und Laufzeitgliedern lassen sich auch Port-spezifische Kodierungen erzeugen, die eine eineindeutige Identifizierung ermöglichen.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen. Insbesondere umfasst die Erfindung ebenfalls Ausführungsformen mit jeglicher Kombination von Merkmalen, die vorstehend zu verschiedenen Aspekten und/oder Ausführungsformen genannt oder gezeigt sind.

Die Erfindung umfasst ebenfalls einzelne Merkmale in den Figuren auch wenn sie dort im Zusammenhang mit anderen Merkmalen gezeigt sind und/oder vorstehend nicht genannt sind.

Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Alle Bezugszeichen in den Ansprüchen sind nicht als den Umfang der Ansprüche einschränkend zu verstehen.

## Patentansprüche

1. Leistungskoppler (12) für ein passives optisches Netz, mit
mindestens einer Anschlussstelle zur Verbindung des Leistungskopplers (12) mit mindestens einem optischen Leitungsende (10);
mehreren Anschlussstellen zur Verbindung des Leistungskopplers (12) mit mehreren endseitigen Teilnehmerstationen (11);
wobei der Leistungskoppler (12) angepasst ist, ein ankommendes optisches Signal auf mehrere optische Fasern aufzuteilen und das von mehreren optischen Fasern kommende Signal zu einem gemeinsamen zusammenzufassen, wobei die Gesamtleistung des ankommenden Signals dabei durch die Anzahl der mehreren Anschlussstellen aufgeteilt wird,
**dadurch gekennzeichnet, dass**
jede der mehreren Anschlussstellen zur Verbindung des Leistungskopplers (12) mit den endseitigen Teilnehmerstationen (11) jeweils ein Kennzeichnungselement (121) aufweist, das eingerichtet ist, ein von der an dieser Anschlussstelle angeschlossenen Teilnehmerstation (11) empfangenes optisches Signal (M) zu dessen Kennzeichnung eineindeutig zu beeinflussen, wobei sich die Kennzeichnungselemente der einzelnen Anschlussstellen voneinander unterscheiden, um so die eineindeutige Beeinflussung des jeweils empfangenen Signals (M) von der jeweils angeschlossenen Teilnehmerstation bereitzustellen.

2. Leistungskoppler nach Anspruch 1, wobei die Kennzeichnungselemente (121) eingerichtet sind, das empfangene optische Signal (M) an die sendende Teilnehmerstation (11) als reflektiertes optisches Signal (R) zu reflektieren.

3. Leistungskoppler nach Anspruch 1 oder 2, wobei das empfangene optische Signal (M) im Verlauf von Intensität, Frequenz, oder Phase, oder in einer Kombination daraus beeinflusst wird.

4. Leistungskoppler nach einem der vorstehenden Ansprüche, wobei die Kennzeichnungselemente (121) jeweils ein reflektierendes Filterelement aufweisen.

5. Leistungskoppler nach Anspruch 4, wobei das reflektierende Filterelement eine reflektierende Filterstruktur, insbesondere ein Faser Bragg Gitter aufweist.

6. Teilnehmerstationen (11) für ein passives optisches Netz, mit
mindestens einer Anschlussstelle zur Verbindung der Teilnehmerstationen (11) mit jeweils einer Anschlussstelle mindestens eines Leistungskopplers (12);
wobei der Leistungskoppler (12) angepasst ist, ein ankommendes optisches Signal auf mehrere optische Fasern aufzuteilen und das von mehreren optischen Fasern kommende Signal zu einem gemeinsamen zusammenzufassen, wobei die Gesamtleistung des ankommenden Signals dabei durch die Anzahl der mehreren Anschlussstellen aufgeteilt wird,
**dadurch gekennzeichnet, dass**
die Teilnehmerstationen (11) eingerichtet sind, ein optisches Messsignal (M) an den Leistungskoppler (12) zur Identifizierung der jeweiligen Anschlussstelle des Leistungskopplers (12), mit dem die Teilnehmerstation verbunden ist, zu senden, und ein von der jeweiligen Anschlussstelle des Leistungskopplers (12) reflektiertes Signal (R) zu empfangen und eine jeweilige eineindeutige Kennzeichnung, die dem Signal (R) von dem Leistungskoppler (12) versehen wurde, zu extrahieren.

7. Teilnehmerstationen nach Anspruch 6, ferner dazu eingerichtet, die extrahierte Kennzeichnung an ein optisches Leitungsende (10) zu übermitteln.

8. Verfahren, das von einer Anordnung aus mindestens einem Leistungskoppler (12) mit mehreren Anschlussstellen zur Verbindung des Leistungskopplers (12) mit mehreren endseitigen Teilnehmerstationen (11) eines passiven optischen Netzes ausgeführt wird, wobei der Leistungskoppler (12) angepasst ist, ein ankommendes optisches Signal auf mehrere optische Fasern aufzuteilen und das von mehreren optischen Fasern kommende Signal zu einem gemeinsamen zusammenzufassen, wobei die Gesamtleistung des ankommenden Signals dabei durch die Anzahl der mehreren Anschlussstellen aufgeteilt wird,
mit den Schritten:
a) Senden eines optischen Messsignals (M) von einer der mehreren Teilnehmerstationen (11) an den Leistungskoppler (12), mit dem die Teilnehmerstation verbunden ist; **gekennzeichnet durch**
b) eineindeutiges Beeinflussen des empfangenen optischen Messsignals (M) durch ein Kennzeichnungselement der Anschlussstelle des Lcistungskopplers (12), an der die Teilnehmerstation (11) angeschlossen ist, zu dessen Kennzeichnung, wobei sich die Kennzeichnungselemente der einzelnen Anschlussstellen voneinander unterscheiden, um so die eineindeutige Beeinflussung des jeweils empfangenen Messignals (M) von der jeweils angeschlossenen Teilnehmerstation bereitzustellen;
c) Reflektieren des beeinflussten Signals (R) zurück zur sendenden Teilnehmerstation (11); und
d) Extrahieren, durch die Teilnehmerstation, der dem Messsignal (M) durch die Beeinflussung in Schritt b) vermittelten Kennzeichnung aus dem reflektierten Signal (R).

9. Verfahren nach Anspruch 8, ferner mit dem Schritten: e) Übermitteln der extrahierten Kennzeichnung von der Teilnehmerstation (11) an ein optisches Leitungsende (10), mit dem der Leistungskoppler verbunden ist, und f) Speichern der übermittelten Kennzeichnung in einer Datenbank des optischen Leitungsendes (10).

10. Verfahren nach Anspruch 8 oder 9, wobei Schritt a) von der Teilnehmerstation (11) automatisiert auf Aufforderung durch ein optisches bzw. das optische Leitungsende (10) initiiert wird.

11. Verfahren nach einem der Ansprüche 8 bis 10, ferner mit dem Schritt des Auswertens der übermittelten Kennzeichnung an einem bzw. am optischen Leitungsende (10) zur Feststellung, ob die Teilnehmerstation (11) korrekt mit der zugeordneten Anschlussstelle verbunden ist oder ob eine nicht registrierte Teilnehmerstation am Leistungskoppler angeschlossen ist.

12. Verfahren nach einem der Ansprüche 9 bis 11, wobei das Messsignal (M) bezüglich der empfangenen Anschlussstelle des Leistungskopplers unspezifisch ist.

13. Verfahren, das in einem Leistungskoppler (12) eines passiven optischen Netzes ausgeführt wird, mit den Schritten:
Empfangen, an dem Leistungskoppler (12), eines optischen Messsignals (M) von einer Teilnehmerstation (11), die mit einer von mehreren Anschlussstellen des Leistungskopplers (12) verbunden ist,
wobei der Leistungskoppler (12) angepasst ist, ein ankommendes optisches Signal auf mehrere optische Fasern aufzuteilen und das von mehreren optischen Fasern kommende Signal zu einem gemeinsamen zusammenzufassen, wobei die Gesamtleistung des ankommenden Signals dabei durch die Anzahl der mehreren Anschlussstellen aufgeteilt wird, **gekennzeichnet durch**
- eineindeutiges Beeinflussen des empfangenen optischen Messsignals (M) durch ein Kennzeichnungselement der Anschlussstelle des Leistungskopplers (12), an der die Teilnehmerstation (11) angeschlossen ist, zu dessen Kennzeichnung, wobei sich die Kennzeichnungselemente der einzelnen Anschlussstellen voneinander unterscheiden, um so die eineindeutige Beeinflussung des jeweils empfangenen Messsignals (M) von der jeweils angeschlossenen Teilnehmerstation bereitzustellen; und
- Reflektieren des beeinflussten Signals (R) zurück zur sendenden Teilnehmerstation (11).

14. Verfahren, das in einer Teilnehmerstation (11) eines passiven optischen Netzes ausgeführt wird, mit den Schritten:
Senden eines optischen Messsignals (M) von der Teilnehmerstation (11) an einen Leistungskoppler (12), mit dem die Teilnehmerstation verbunden ist, wobei der Leistungskopper (12) mehrere Anschlussstellen zur Verbindung des Leistungskopplers (12) mit mehreren Teilnehmerstationen (11) aufweist, wobei der Leistungskoppler (12) angepasst ist, ein ankommendes optisches Signal auf mehrere optische Fasern aufzuteilen und das von mehreren optischen Fasern kommende Signal zu einem gemeinsamen zusammenzufassen, wobei die Gesamtleistung des ankommenden Signals dabei durch die Anzahl der mehreren Anschlussstellen aufgeteilt wird, **gekennzeichnet durch**
- Empfangen, an der Teilnehmerstation (11), des von dem Leistungskoppler (12) reflektierten Signals (R), das an der Anschlussstelle des Leistungskopplers (12) durch eineindeutiges Beeinflussen des empfangenen optischen Messsignals (M) durch ein Kennzeichnungselement der Anschlussstelle des Leistungskopplers (12), an der die Teilnehmerstation (11) angeschlossen ist, zu dessen Kennzeichnung erzeugt wird, wobei sich die Kennzeichnungselemente der einzelnen Anschlussstellen voneinander unterscheiden, um so die eineindeutige Beeinflussung des jeweils empfangenen Messsignals (M) von der jeweils angeschlossenen Teilnehmerstation bereitzustellen; und
- Extrahieren, durch die Teilnehmerstation, der dem Messsignal (M) durch die Beeinflussung im voran gegangenen Schritt vermittelten Kennzeichnung aus dem reflektierten Signal (R).

## Claims

1. A power coupler (12) for a passive optical network, having
at least one port for connecting the power coupler (12) to at least one optical line terminal (10);
a plurality of ports for connecting the power coupler (12) to a plurality of terminal subscriber stations (11);
wherein the power coupler (12) is adapted to divide an incoming optical signal into a plurality of optical fibers and to combine the signal coming from a plurality of optical fibers to form a joint signal, wherein the total power of the incoming signal is divided by the number of the plurality of ports,
**characterized in that**
each of the plurality of ports for connecting the power coupler (12) to the terminal subscriber stations (11) has in each case an identifying element (121) which is arranged to influence an optical signal (M) received from the subscriber station (11) connected at this port one-to-one in order to identify the same, wherein the identifying elements of the individual ports differ from one another in order to thus provide the one-to-one influencing of the respectively received signal (M) from the respectively connected subscriber station.

2. A power coupler according to claim 1, wherein the identifying elements (121) are configured to reflect the received optical signal (M) to the transmitting subscriber station (11) as a reflected optical signal (R).

3. A power coupler according to claim 1 or 2, wherein the intensity, frequency, or phase, or a combination thereof, of the received optical signal (M) is influenced.

4. A power coupler as claimed in any one of the preceding claims, wherein each of the identifying elements (121) comprises a reflecting filter element.

5. A power coupler according to claim 4, wherein the reflecting filter element has a reflecting filter structure, in particular a fiber Bragg grating.

6. Subscriber stations (11) for a passive optical network, having
at least one port for connecting the subscriber stations (11) to a port each of at least one power coupler (12);
wherein the power coupler (12) is configured to divide an incoming optical signal to a plurality of optical fibers and to combine the signal coming from a plurality of optical fibers to a joint signal, wherein the total power of the incoming signal is divided by the number of the ports,
**characterized in that**
the subscriber stations (11) are configured to transmit an optical measurement signal (M) to the power coupler (12) for identifying the respective port of the power coupler (12) to which the subscriber station is connected, and to receive a signal (R) reflected by the respective port of the power coupler (12), and to extract the respective one-to-one identifying element provided by the power coupler (12) to the signal (R).

7. Subscriber stations according to claim 6, further configured to transmit the extracted identifying element to the optical line terminal (10).

8. Method executed by an array from at least one power coupler (12) having a plurality of ports for connecting the power coupler (12) to a plurality of terminal subscriber stations (11) of a passive optical network,
wherein the power coupler (12) is configured to divide an incoming optical signal onto a plurality of optical fibers and to combine the signal coming from a plurality of optical fibers to a joint signal, with the total power of the incoming signal being divided by the number of the ports,
the method comprising the steps of:
a) transmitting an optical measurement signal (M) from one of the plurality of subscriber stations (11) to the power coupler (12) to which the subscriber station is connected; **characterized by**
b) one-to-one influencing the received optical measurement signal (M) by an identifying element of the port of the power coupler (12), to which the subscriber station (11) is connected, for identification thereof, wherein the identifying elements of the individual ports differ from one another in order to thus provide one-to-one influencing of the respective measurement signal (M) received from the respective connected subscriber station;
c) reflecting the influenced signal (R) back to the transmitting subscriber station (11); and
d) extracting, by the subscriber station, from the reflected signal (R) the identifying element provided to the measurement signal (M) through the influencing in step b).

9. A method according to claim 8, further comprising the steps of:
e) transmitting the extracted identifying element from the subscriber station (11) to an optical line terminal (10) to which the power coupler is connected, and f) storing the transmitted identifying element in a database of the optical line terminal (10).

10. A method according to claim 8 or 9, wherein step a) is automatically initiated by the subscriber station (11) upon request by an optical or the optical line terminal (10).

11. Method according to any one of claims 8 to 10, further comprising the step of evaluating the transmitted identifying element at one or the optical line terminal (10) for determining whether the subscriber station (11) is correctly connected to the assigned port or whether an unregistered subscriber station is connected to the power coupler,

12. Method according to any one of claims 9 to 11, wherein the measurement signal (M) is unspecific with respect to the received port of the power coupler.

13. Method executed in a power coupler (12) of a passive optical network, comprising the steps of:
receiving, at the power coupler (12), an optical measurement signal (M) from a subscriber station (11) which is connected to a port of the power coupler (12),
wherein the power coupler (12) is configured to divide an incoming optical signal onto a plurality of optical fibers and to combine the signal coming from a plurality of optical fibers to a joint signal, wherein the total power of the incoming signal is divided by the number of the ports,
**characterized by**
one-to-one influencing the received optical measurement signal (M) by an identification element of the port of the power coupler (12) to which the subscriber station (11) is connected, for identification thereof, the identifying elements of the individual ports differing from each other so as to provide the one-to-one influencing of the respective measurement signal (M) received from the respective connected subscriber station; and reflecting the influenced signal (R) back to the transmitting subscriber station (11).

14. Method executed in a subscriber station (11) of a passive optical network, comprising the steps of:
transmitting an optical measurement signal (M) from the subscriber station (11) to the power coupler (12) to which the subscriber station is connected, the power coupler (12) having a plurality of ports for connecting the power coupler (12) with a plurality of subscriber stations (11), the power coupler (12) being configured to divide an incoming optical signal onto a plurality of optical fibers and to combine the signal coming from the plurality of optical fibers to a joint signal, with the total power of the incoming signal being divided by the number of the plurality of ports, **characterized by**:
- receiving, at the subscriber station (11), the signal (R) reflected by the power coupler (12), which signal is generated at the port of the power coupler (12) by one-to-one influencing the received optical measurement signal (M) through an identification element of the port of the power coupler (12), with which the subscriber station (11) is connected, for identification thereof, with the identification elements of the individual ports differing from each other so as to provide the one-to-one influencing of the respective received measurement signal (M) from the respective connected subscriber station; and
- extracting from the reflected signal (R), by the subscriber station, the identifying element of the measurement signal (M) conveyed by the influencing in the preceding step.

## Revendications

1. Coupleur de puissance (12) pour un réseau optique passif, comprenant
au moins un point de branchement servant à relier le coupleur de puissance (12) à au moins une extrémité de ligne (10) optique ;
plusieurs points de branchement servant à raccorder le coupleur de puissance (12) à plusieurs stations d'abonnés (11) situées côté extrémité ;
dans lequel le coupleur de puissance (12) est adapté pour répartir un signal optique entrant sur plusieurs fibres optiques et pour regrouper le signal arrivant depuis plusieurs fibres optiques en un signal commun, dans lequel la puissance totale du signal entrant est divisée dans ce cadre par le nombre des nombreux points de branchement,
**caractérisé en ce que**
chacun des nombreux points de branchement servant à raccorder le coupleur de puissance (12) aux stations d'abonnés (11) situées côté extrémité présente respectivement un élément d'identification (121), qui est mis au point pour influencer de manière biunivoque un signal (M) optique reçu par la station d'abonné (11) branchée audit point de branchement aux fins de son identification, dans lequel les éléments d'identification des divers points de branchement se distinguent les uns des autres afin ainsi de fournir l'influence biunivoque du signal de mesure (M) respectivement reçu par la station d'abonné respectivement branchée.

2. Coupleur de puissance selon la revendication 1, dans lequel les éléments d'identification (121) sont mis au point pour réfléchir le signal (M) optique reçu au niveau de la station d'abonné (11) d'envoi en tant que signal (R) optique réfléchi.

3. Coupleur de puissance selon la revendication 1 ou 2, dans lequel le signal (M) optique reçu est influencé, dans son évolution, par l'intensité, la fréquence, ou la phase, ou une combinaison de ces dernières.

4. Coupleur de puissance selon l'une quelconque des revendications précédentes, dans lequel les éléments d'identification (121) présentent respectivement un élément filtrant réfléchissant.

5. Coupleur de puissance selon la revendication 4, dans lequel l'élément filtrant réfléchissant présente une structure filtrante réfléchissante, en particulier un réseau de Bragg à fibres.

6. Stations d'abonnés (11) pour un réseau optique passif, comprenant
au moins un point de branchement servant à raccorder les stations d'abonnés (11) à respectivement un point de branchement d'au moins un coupleur de puissance (12) ;
dans lesquelles le coupleur de puissance (12) est adapté pour répartir un signal optique entrant sur plusieurs fibres optiques et pour regrouper le signal arrivant depuis plusieurs fibres optiques en un signal commun, dans lesquelles la puissance totale du signal entrant est divisée dans ce cadre par le nombre des nombreux points de branchement,
**caractérisées en ce que**
les stations d'abonnés (11) sont mises au point pour envoyer un signal de mesure (M) optique au coupleur de puissance (12) aux fins de l'identification du point de branchement respectif du coupleur de puissance (12), auquel la station d'abonné est raccordée, et pour recevoir un signal réfléchi (R) par le point de branchement respectif du coupleur de puissance (12) et pour extraire une identification biunivoque respective, dont le signal (R) a été doté par le coupleur de puissance (12).

7. Stations d'abonnés selon la revendication 6 mises au point en outre pour transférer l'identification extraite à une extrémité de ligne (10) optique.

8. Procédé, qui est exécuté par un ensemble composé d'au moins un coupleur de puissance (12) avec plusieurs points de branchement servant à raccorder le coupleur de puissance (12) à plusieurs stations d'abonnés (11) situées côté extrémité d'un réseau optique passif, dans lequel le coupleur de puissance (12) est adapté pour répartir un signal optique entrant sur plusieurs fibres optiques et pour regrouper le signal arrivant depuis plusieurs fibres optiques en un signal commun, dans lequel la puissance totale du signal entrant est divisée dans ce cadre par le nombre des nombreux points de branchement,
comprenant les étapes consistant à :
a) envoyer un signal de mesure (M) optique depuis une des nombreuses stations d'abonnés (11) au coupleur de puissance (12), auquel la station d'abonné est raccordée ;
b) influencer de manière biunivoque le signal de mesure (M) optique reçu par un élément d'identification du point de branchement du coupleur de puissance (12), auquel la station d'abonné (11) est branchée, aux fins de son identification, dans lequel les éléments d'identification des divers points de branchement se distinguent afin ainsi de fournir l'influence biunivoque du signal de mesure (M) respectivement reçu par la station d'abonné respectivement branchée ;
c) réfléchir et renvoyer le signal (R) influencé en direction de la station d'abonné (11) d'envoi ;
et
d) faire extraire par la station d'abonné du signal (R) réfléchi l'identification transmise au signal de mesure (M) par l'influence lors de l'étape b).

9. Procédé selon la revendication 8 comprenant en outre les étapes consistant à : e) transférer l'identification extraite de la station d'abonné (11) à une extrémité de ligne (10) optique, à laquelle le coupleur de puissance est raccordé, et f) mémoriser l'identification transférée dans une base de données de l'extrémité de ligne (10) optique.

10. Procédé selon la revendication 8 ou 9, dans lequel l'étape a) est initiée par la station d'abonné (11) de manière automatisée sur demande par une extrémité ou l'extrémité de ligne (10) optique.

11. Procédé selon l'une quelconque des revendications 8 à 10, comprenant en outre l'étape consistant à évaluer l'identification transférée à une ou à l'extrémité de ligne (10) optique afin de constater si la station d'abonné (11) est correctement raccordée au point de branchement associé ou si une station d'abonné non enregistrée est branchée au coupleur de puissance.

12. Procédé selon l'une quelconque des revendications 9 à 11, dans lequel le signal de mesure (M) n'est pas spécifique par rapport au point de branchement reçu du coupleur de puissance.

13. Procédé, qui est exécuté dans un coupleur de puissance (12) d'un réseau optique passif, comprenant les étapes consistant à :
recevoir, sur le coupleur de puissance (12), un signal de mesure (M) optique d'une station d'abonné (11), qui est raccordée à un ou à plusieurs points de branchement du coupleur de puissance (12),
dans lequel le coupleur de puissance (12) est adapté pour répartir un signal optique entrant sur plusieurs fibres optiques et pour regrouper le signal arrivant depuis plusieurs fibres optiques en un signal commun, dans lequel la puissance totale du signal entrant est dans ce cadre divisée par le nombre des nombreux points de branchement, **caractérisé par**
- l'influence biunivoque du signal de mesure (M) optique reçu par un élément d'identification du point de branchement du coupleur de puissance (12), à laquelle la station d'abonné (11) est branchée, aux fins de son identification, dans lequel les éléments d'identification des divers points de branchement se distinguent des autres afin ainsi de fournir l'influence biunivoque du signal de mesure (M) respectivement reçu par la station d'abonné respectivement branchée ; et
- le réfléchissement et le renvoi du signal (R) influencé en direction de la station d'abonné (11) d'envoi.

14. Procédé, qui est exécuté dans une station d'abonné (11) d'un réseau optique passif, comprenant les étapes consistant à :
envoyer un signal de mesure (M) optique depuis la station d'abonné (11) à un coupleur de puissance (12), auquel la station d'abonné est raccordée, dans lequel le coupleur de puissance (12) présente plusieurs points de branchement servant à raccorder le coupleur de puissance (12) à plusieurs stations d'abonnés (11), dans lequel le coupleur de puissance (12) est adapté pour répartir un signal optique entrant sur plusieurs fibres optiques et pour regrouper le signal arrivant depuis plusieurs fibres optiques en un signal commun, dans lequel la puissance totale du signal entrant est dans ce cadre divisée par le nombre des nombreux points de branchement, **caractérisé par**
- la réception, sur la station d'abonné (11), du signal (R) réfléchi par le coupleur de puissance (12), qui est généré au niveau du point de branchement du coupleur de puissance (12) par l'influence biunivoque du signal de mesure (M) optique reçu par un élément d'identification du point de branchement du coupleur de puissance (12), à laquelle la station d'abonné (11) est branchée, aux fins de son identification, dans lequel les éléments d'identification des divers points de branchement se distinguent les uns des autres afin de fournir l'influence biunivoque du signal de mesure (M) respectivement reçu par la station d'abonné respectivement branchée ; et
- l'extraction, par la station d'abonné, du signal (R) réfléchi de l'identification transmise au signal de mesure (M) par l'influence lors de l'étape précédente.
